# EUROPEAN PATENT SPECIFICATION

(11) **EP 0 726 981 B1**
(45) Date of publication and mention of the grant of the patent: **07.04.1999**
(21) Application number: 94903906.9
(22) Date of filing: 05.01.1994
(51) Int. Cl.: D21D 5/02

(54) **ARRANGEMENT IN A PRESSURE SCREEN FOR SEPARATING IMPURITIES FROM A FIBRE SUSPENSION FED INTO THE SCREEN**
ANLAGE IN EINEM DRUCKSIEB ZUR TRENNUNG DER VERUNREINIGUNGEN AUS EINER IN DEM SIEB EINGEFÜHRTEN FASERSUSPENSION
SYSTEME DE SEPARATION DES IMPURETES D'UNE SUSPENSION FIBREUSE INTRODUITE DANS UN EPURATEUR SOUS PRESSION

(30) Priority: 11.01.1993 FI 930095
(43) Date of publication of application: 21.08.1996
(73) Proprietor: VALMET CORPORATION, 00620 Helsinki (FI)
(72) Inventor: HOLOPAINEN, Pentti, FIN-33180 Tampere (FI)
(74) Representative: Skone James, Robert Edmund
(86) International application number: FI9400005
(87) International publication number: WO9416141

(56) References cited:
- DE-C- 3 015 833
- US-A- 3 713 536
- US-A- 3 933 649
- US-A- 4 634 521

## Description

The invention relates to an arrangement in a pressure screen for separating impurities from a fibre suspension fed into the pressure screen, the pressure screen comprising an inlet chamber in the upper portion; a supply conduit connected to the lower portion of the inlet chamber tangentially with respect to it; a conical chunk collar positioned centrally in the inlet chamber and having a central top opening through which the fibre suspension flows downward to be screened in the pressure screen; and a chunk trap for separating impurities heavier than the fibre suspension by means of gravity.

Fibre suspension always contains various impurities disadvantageous to its properties, such as pieces of plastic, sand, etc., which should be removed before further processing. To achieve this, various cleaning means have been used in which the suspension is brought into a spiral movement so as to separate heavy impurities by a chunk trap disposed close to the outer periphery while impurities lighter than the fibre suspension have been separated from the centre of the turbulent flow. This, however, requires a plurality of separate separating means, which complicates the process, and the number of required pipelines and other structures increases. It is also known to use separate chunk separation in pressure screens, in which case the fibre suspension is fed into the screen tangentially with respect to the screen shell, and the screen has a cylindrical or conical chunk collar for separating impurities. An arrangement of this type is disclosed in DE-C-3 015 833 and in FI Patent 70 059, in which a separate chunk trap is provided below a supply line for fibre suspension so as to separate stones and other heavy impurities from the mass flow when the flow rate decreases.

A drawback of the prior art arrangements is that their separation ability is uneven and the removal of both heavy impurities and those lighter than the fibre suspension is not efficient enough. The arrangement of the above-mentioned FI Patent 70 059 enables heavy impurities to be separated to some extent whereas no light impurities can be separated.

The object of the present invention is to provide an arrangement in a pressure screen for efficient separation of impurities from a fibre suspension. The arrangement according to the invention is characterized in that the outer shell of the inlet chamber tapers upward and that a guide plate is mounted in the inlet chamber on the edge of the supply conduit on the side of the inlet chamber so that it prevents a fibre suspension flow that has already passed around the inlet chamber from immediately mixing with an incoming fibre suspension flow.

An essential feature of the invention is that the fibre suspension inlet chamber tapers upward and comprises a plate for guiding the fibre suspension. Incoming fibre suspension is passed to the outermost surface of the inlet chamber, and after it has passed around the inlet chamber once, it is guided by means of the guide plate inside and below the incoming mass flow so that a neat turbulent flow is achieved in the inlet chamber of the pressure screen. Another essential feature of the invention is that the speed of the flow decreases when it enters the lower portion, i.e. the largest space in the inlet chamber, so that, when suitable guide means are provided at the bottom of the inlet chamber, light impurities along with the fibre suspension are passed by the guide means across a chunk trap for heavy impurities whereas heavy impurities fall down into the chunk trap. A further essential feature of the invention is that a downwardly directed conical part is provided centrally in the upper portion of the inlet chamber for slowing down the turbulent flow in the upper portion of the inlet chamber so that light impurities will be separated more easily from the fibre suspension and are discharged through a discharge conduit provided centrally at the top of the inlet chamber. Still another essential feature of the invention is that a conical chunk collar, i.e. a collar-like member disposed centrally in the chamber so as to control the flow, is attached to the rotor or foils of the pressure screen so as to rotate with the rotor and to make the turbulent flow and thus the separation of chunk more effective.

An advantage of the arrangement according to the invention is that a single screen assembly separates both heavy and light impurities efficiently from the fibre suspension without any separate separating means, which reduces the cost of the pipeline system as well as the installation and investment cost. Moreover, as the dimensions and construction of the screening means according to the arrangement are adapted for the screen used, it can be ensured that the equipment as a whole operates as desired.

The invention will be described in greater detail with reference to the attached drawings, in which
Figure 1 is a schematic sectional view of the top portion of a pressure screen according to the invention;
Figure 2 is a schematic sectional view of the top portion of the pressure screen shown in Figure 1 along section A-A; and
Figure 3 is a schematic sectional view along section B-B shown in Figure 2 of a portion of the pressure screen according to the invention for separating heavy particles.

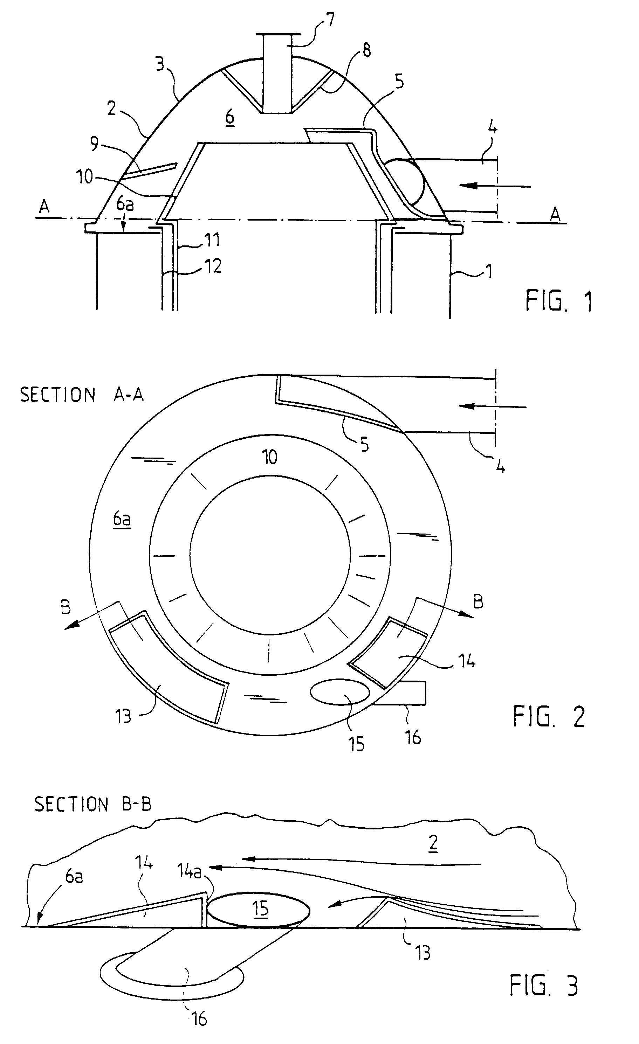

The top portion of the pressure screen shown in Figure 1 comprises an upwardly tapering inlet cone 2 adjoining a screen shell 1, and a top dome 3 having a substantially spherical surface and forming an extension of the inlet cone 2. The inlet cone 2 and the top dome 3 may also form a single integral cover portion tapering in an upward direction. The cone portion 2 need not be absolutely conical but it may also define a spherical surface, for instance; at simplest, the inlet cone 2 and the top dome 3 form part of a semispherical cover portion. A supply conduit 4 for fibre suspension is connected to the inlet cone 2 in a manner such that the flow of fibre suspension enters the cone tangentially with respect to it, as appears from Figure 2 in particular. A guide plate 5 is mounted beside the supply conduit 4. It extends from the surface of the inlet cone 2 from below the supply conduit 4 and closes an inlet chamber 6 formed by the inlet cone 2 and the top dome 3 partially in the direction of flow of the fibre suspension so that fibre suspension that has already passed once around the inlet chamber will not immediately mix with the incoming flow. If desired, the control plate 5 may be bent above the supply conduit 4 substantially horizontally toward the centre of the pressure screen so that it guides the flow of fibre suspension to the centre of the inlet chamber. Centrally at the top of the top dome 3 there is provided a discharge conduit 7 for removing light impurities, and a downwardly tapering counter cone 8 is mounted around the discharge conduit 7 so as to accelerate the turbulent flow of fibre suspension in the upper portion of the inlet chamber, thus facilitating the separation of light impurities from the fibre suspension. Flow control means 9 are further attached to the inside of the inlet cone 2. They extend downward in the direction of flow of fibre suspension so as to guide the flow portion containing heavy impurities to the lower portion of the inlet chamber. An upwardly tapering conical chunk collar 10 is provided centrally in the inlet chamber 6. Fibre suspension flows through a central opening in the chunk collar 10 down into an actual screening space. The chunk collar 10 is arranged to rotate with the rotor e.g. by connecting it to the ends of foil vanes 11. As the rotor rotates, the foil vanes sweep the surface of a screen cylinder 12, thus keeping the screen cylinder free of reject. In other respects, the operation of the pressure screen is well-known to one skilled in the art, and therefore will not be described herein.

Figure 2 is a sectional top view of the pressure screen of Figure 1 along line A-A. As appears from the figure, the supply conduit 4 joins the inlet cone 2 tangentially with respect to the outer shell 1 of the inlet cone so that the fibre suspension starts to flow around along the outermost surface of the cone. As a consequence, it will be guided by the flow control means 9 shown in Figure 1 and passed to the lower portion of the inlet chamber 6. When the suspension flows along the bottom 6a in the lower portion, it passes over a first and a second guide 13 and 14 (shown in greater detail in Figure 3) so that fibre suspension and lighter reject flow readily over the guides while heavy impurities fall between the guides 13 and 14, and are then discharged through a chunk trap 15 and a reject pipe 16 mounted at the bottom. Finally, the fibre suspension flows upward along the surface of the chunk collar 10 and passes through the central opening of the collar to the inner surface of the screen cylinder 12, where the screening takes place in a manner similar to the operation of a conventional pressure screen.

Figure 3 is a schematic sectional view along line B-B indicated in Figure 2. As appears from the figure, the first guide 13 curves upward so that it causes the fibre suspension to flow upward from the bottom 6a of the inlet chamber. The end of the guide 13 is bevelled to some extent, which produces some turbulence, and when lighter impurities and the fibre suspension flow from the edge of the guide 13 along a substantially straight flow line, the heavier impurities fall downward and further into the chunk trap 15. The chunk trap 15 continues as the reject pipe 16, which is possibly also directed obliquely downward so as to facilitate the separation of impurities. An end 14a of the second guide 14 in the direction of flow is upright, so that it also causes turbulence around the chunk trap 15 and facilitates the separation of heavy impurities passing down along the surface inclined in the direction of flow. Along a downwardly inclined surface of the guide 14 the fibre suspension again returns to the level of the bottom of the inlet chamber 6 of the pressure screen and further below the guide plate 5, which guides the flow towards the top opening of the chunk collar.

The invention has been described above and in the drawings by way of example, and it is in no way restricted to the example. The shape and position of the guides can be realized in different ways, depending on the shape and size of the inlet chamber. The chunk collar may be attached either to the shaft or body of the rotor, or as shown in the figures, to the ends of the rotor foils. The chunk collar need not be connected to the rotor for rotation but it may also be mounted unrotatably, provided that it is of a suitable shape and implements other features essential to the pressure screen. The arrangement may be used in various multi-stage pressure screens as well as in conventional single-stage pressure screens.

## Claims

1. Arrangement in a pressure screen for separating impurities from a fibre suspension fed into the pressure screen, the pressure screen comprising an inlet chamber (6) in the upper portion; a supply conduit (4) connected to the lower portion of the inlet chamber (6) tangentially with respect to it; a conical chunk collar (10) positioned centrally in the inlet chamber (6) and having a central top opening through which the fibre suspension flows downward to be screened in the pressure screen; and a chunk trap (15) for separating impurities heavier than the fibre suspension by means of gravity, **characterized** in that the outer shell of the inlet chamber (6) tapers upward and that a guide plate (5) is mounted in the inlet chamber (6) on the edge of the supply conduit (4) on the side of the inlet chamber (6) so that it prevents a fibre suspension flow that has already passed around the inlet chamber (6) from immediately mixing with an incoming fibre suspension flow.

2. Arrangement according to claim 1, **characterized** in that the upper portion of the inlet chamber (6) is spherical in shape.

3. Arrangement according to claim 1 or 2, **characterized** in that a discharge conduit (7) is mounted centrally at the top of the inlet chamber (6) for removing impurities lighter than the fibre suspension centrally from the upper portion of the inlet chamber (6).

4. Arrangement according to claim 3, **characterized** in that a counter cone (8) tapering downward is mounted around the discharge conduit (7).

5. Arrangement according to any of the preceding claims, **characterized** in that the control plate (5) has been bent above the chunk collar (10) over it towards the centre of the pressure screen, so that the control plate (5) guides a fibre suspension flow that has already passed around the inlet chamber (6) under and inside a new incoming fibre suspension flow.

6. Arrangement according to any of the preceding claims, **characterized** in that the chunk trap (15) is mounted at the bottom (6a) of the inlet chamber (6); that a first and a second guide (13, 14) are mounted at the bottom (6a) of the inlet chamber (6) on both sides of the chunk trap (15) so that the first guide (13) in the direction of flow of the fibre suspension (11) passes the fibre suspension upward from the bottom (6a) across the chunk trap (15), the second guide (14) being positioned after the chunk trap in the direction of flow; that an edge (14a) of the second guide (14) close to the chunk trap (15) is substantially perpendicular to the bottom (6a); and that the upper surface of the second guide slopes down to the bottom (6a) in the direction of flow.

7. Arrangement according to any of the preceding claims, **characterized** in that the chunk collar (10) is mounted to rotate with the rotor of the pressure screen.

8. Arrangement according to claim 7, **characterized** in that the chunk collar (10) is connected to rotor foils (11).

9. Arrangement according to any of the preceding claims, **characterized** in that the lower portion of the outer shell of the inlet chamber is formed by an inlet cone (2); and that at least one flow control means (9) is attached to the inner surface of the inlet cone (2) so as to pass the fibre suspension flow down to the bottom (6a) of the inlet chamber (6).

## Patentansprüche

1. Anordnung in einem Drucksieb zum Abtrennen von Verunreinigungen aus einer dem Drucksieb zugeführten Fasersuspension, wobei das Drucksieb umfaßt: eine Einlaßkammer (6) im oberen Teil; ein Zuleitungsrohr (4), das mit dem unteren Teil der Einlaßkammer (6) verbunden ist, und zwar tangential mit Bezug dazu; einen konischen Klumpenkragen (10), der mittig in der Einlaßkammer (6) angeordnet ist und eine mittige obere Öffnung aufweist, durch die die Fasersuspension zur Siebung im Drucksieb nach unten fließt; und eine Klumpenfalle (15), um Verunreinigungen, die schwerer sind als die Fasersuspension, mittels Schwerkraft abzutrennen, dadurch gekennzeichnet, daß sich der Außenmantel der Einlaßkammer (6) nach oben verjüngt und daß in der Einlaßkammer (6) auf dem Rand des Zuleitungsrohres (4) auf der Seite der Einlaßkammer (6) eine Führungsplatte (5) angebracht ist, so daß sie verhindert, daß sich ein Fasersuspensionsstrom, der bereits um die Einlaßkammer (6) herumgetreten ist, umgehend mit einem ankommenden Fasersuspensionsstrom vermischt.

2. Anordnung nach Anspruch 1, dadurch gekennzeichnet, daß der obere Teil der Einlaßkammer (6) kugelförmig ist.

3. Anordnung nach Anspruch 1 oder 2, dadurch gekennzeichnet, daß eine Abführrohrleitung (7) mittig oben auf der Einlaßkammer (6) angebracht ist, um Verunreinigungen, die leichter sind als die Fasersuspension, mittig aus dem oberen Teil der Einlaßkammer (6) zu entfernen.

4. Anordnung nach Anspruch 3, dadurch gekennzeichnet, daß ein sich nach unten verjüngender Gegenkonus (8) um die Abführrohrleitung (7) herum angebracht ist.

5. Anordnung nach einem der vorangehenden Ansprüche, dadurch gekennzeichnet, daß die Steuerplatte (5) oberhalb des Klumpenkragens (10) über ihn in Richtung auf die Mitte des Drucksiebes gebogen worden ist, so daß die Steuerplatte (5) einen Fasersuspensionsstrom, der bereits um die Einlaßkammer (6) herumgetreten ist, unter und ins Innere eines neuen ankommenden Fasersuspensionsstroms lenkt.

6. Anordnung nach einem der vorangehenden Ansprüche, dadurch gekennzeichnet, daß die Klumpenfalle (15) am Boden (6a) der Einlaßkammer (6) angebracht ist; daß eine erste und eine zweite Führung (13, 14) auf beiden Seiten der Klumpenfalle (15) am Boden (6a) der Einlaßkammer (6) angebracht sind, so daß die erste Führung (13) in Strömungsrichtung der Fasersuspension (11) die Fasersuspension vom Boden (6a) aus nach oben über die Klumpenfalle (15) führt, wobei die zweite Führung (14) in Strömungsrichtung hinter der Klumpenfalle angeordnet ist; daß ein Rand (14a) der zweiten Führung (14) nahe der Klumpenfalle (15) im wesentlichen senkrecht zum Boden (6a) ist; und daß die Oberseite der zweiten Führung in Strömungsrichtung zum Boden (6a) hin abfällt.

7. Anordnung nach einem der vorangehenden Ansprüche, dadurch gekennzeichnet, daß der Klumpenkragen (10) zur Drehung mit dem Rotor des Drucksiebes angebracht ist.

8. Anordnung nach Anspruch 7, dadurch gekennzeichnet, daß der Klumpenkragen (10) mit Rotorblättern (11) verbunden ist.

9. Anordnung nach einem der vorangehenden Ansprüche, dadurch gekennzeichnet, daß der untere Teil des Außenmantels der Einlaßkammer von einem Einlaßkonus (2) gebildet wird; und daß mindestens eine Strömungssteuereinrichtung (9) an der Innenseite des Einlaßkonus (2) angebracht ist, so daß sie den Fasersuspensionsstrom zum Boden (6a) der Einlaßkammer (6) führt.

## Revendications

1. Agencement de filtre à pression pour séparer des impuretés d'une suspension de fibres introduite dans le filtre à pression, le filtre à pression comprenant une chambre d'entrée (6) dans la partie supérieure, un conduit d'alimentation (4) relié à la partie inférieure de la chambre d'entrée (6) tangentiellement par rapport à celle-ci, un collier à blocs conique (10) positionné de manière centrée dans la chambre d'entrée (6) et ayant une ouverture supérieure centrale au travers de laquelle la suspension de fibres s'écoule vers le bas pour être filtrée dans le filtre à pression, et un piège à blocs (15) pour séparer des impuretés plus lourdes que la suspension de fibres au moyen de la gravité, caractérisé en ce que l'enveloppe extérieure de la chambre d'entrée (6) converge vers le haut et en ce qu'une plaque de guidage (5) est montée dans la chambre d'entrée (6) sur le bord du conduit d'alimentation (4) sur le côté de la chambre d'entrée (6) de sorte qu'elle empêche un écoulement de suspension de fibres qui est déjà passé autour de la chambre d'entrée de se mélanger immédiatement avec un écoulement de suspension de fibres arrivant.

2. Agencement selon la revendication 1, caractérisé en ce que la partie supérieure de la chambre d'entrée (6) est de forme sphérique.

3. Agencement selon la revendication i ou 2, caractérisé en ce qu'un conduit de sortie (7) est monté de manière centrée au sommet de la chambre (6) pour retirer des impuretés plus légères que la suspension de fibres de manière centrée depuis une partie supérieure de la chambre d'entrée (6).

4. Agencement selon la revendication 3, caractérisé en ce qu'un contre-cône (8) convergeant vers le bas est monté autour du conduit de sortie (7).

5. Agencement selon l'une quelconque des revendications précédentes, caractérisé en ce que la plaque de commande (5) a été courbée au-dessus du collier à blocs (10) sur celui-ci vers le centre du filtre à pression, de sorte que la plaque de commande (5) guide un écoulement de suspension de fibres qui est déjà passé autour de la chambre d'entrée (6) sous et à l'intérieur d'un nouvel écoulement de suspension de fibres arrivant.

6. Agencement selon l'une quelconque des revendications précédentes, caractérisé en ce que le piège à bloc (15) est monté au fond (6a) de la chambre d'entrée (6), en ce qu'un premier et un deuxième guide (13, 14) sont montés au fond (6a) de la chambre d'entrée (6) de chaque côté du piège à blocs (15) de sorte que le premier guide (13) dans la direction d'écoulement de la suspension de fibres (11) fait passer la suspension de fibres vers le haut depuis le fond (6a) au travers du piège à blocs (15), le deuxième guide (14) étant positionné après le piège à blocs selon la direction d'écoulement, en ce qu'un bord (14a) du deuxième guide (14) proche du piège à blocs (15) est sensiblement perpendiculaire au fond (6a), et en ce que la surface supérieure du deuxième guide est inclinée vers le bas jusqu'au fond (6A) dans la direction d'écoulement.

7. Agencement selon l'une quelconque des revendications précédentes, caractérisé en ce que le collier à blocs (10) est monté pour tourner avec le rotor du filtre à pression.

8. Agencement selon la revendication 7, caractérisé en ce que le collier à blocs (10) est relié à des feuilles de rotor (11).

9. Agencement selon l'une quelconque des revendications précédentes, caractérisé en ce que la partie inférieure de l'enveloppe extérieure de la chambre d'entrée est formée par un cône d'entrée (2), et en ce qu'au moins un moyen de commande d'écoulement (9) est fixé à la surface intérieure du cône d'entrée (2) de manière à faire passer l'écoulement de suspension de fibres vers le bas jusqu'au fond (6a) de la chambre d'entrée (6).
